# EUROPÄISCHE PATENTSCHRIFT

(11) **EP 2 374 742 B1**
(45) Veröffentlichungstag und Bekanntmachung des Hinweises auf die Patenterteilung: **11.06.2014**
(21) Anmeldenummer: 11160832.9
(22) Anmeldetag: 01.04.2011
(51) Int. Cl.: B65G 47/90, B65G 57/18, B65G 57/00

(54) **Vorrichtung und Verfahren zum Stapeln von Profilteilen**
Device and method for stacking profile sections
Dispositif et procédé d'empilement d'éléments de profilé

(30) Priorität: 06.04.2010 DE 102010014336
(43) Veröffentlichungstag der Anmeldung: 12.10.2011
(73) Patentinhaber: Unterschütz, Uwe, 06333 Hettstedt (DE)
(72) Erfinder: Unterschütz, Uwe, 06333 Hettstedt (DE)
(74) Vertreter: Gulde & Partner

(56) Entgegenhaltungen:
- EP-A1- 1 321 397
- EP-A1- 2 072 430
- EP-A2- 0 132 635
- DE-C2- 10 013 417
- DE-U1-202006 018 017
- FR-A1- 2 320 881
- US-A1- 2007 272 515

## Beschreibung

Die Erfindung betrifft eine Vorrichtung und ein Verfahren zum Stapeln von Profilteilen mit einer Greifeinrichtung zum Greifen der Profilteile und einer Ablage zum lageweisen Ablegen der Profilteile.

Metall- und Kunststoffprofile werden im Allgemeinen durch Strangwalz- und/oder Strangpressverfahren hergestellt. Die erhaltenen Strangprofile werden dann zu Profilteilen abgetrennt, die anschließend gesammelt, gestapelt und gebündelt werden müssen.

Das Stapeln, Bündeln und Packen derartiger Profilteile wird üblicherweise manuell ausgeführt. Insbesondere bei großen Profilteillängen führt dies zu erheblichen Komplikationen.

Aus EP 1 321 397 A1 sind ein Verfahren und eine gattungsgemäße Vorrichtung zum Entpalettieren von unter Einfügung von flachen Zwischenlagen auf Paletten gestapelten Zuschnittstapeln bekannt. Die Vorrichtung umfasst wenigstens einen verfahrbaren Greifkopf und ein am Greifkopf angeordnetes, etwa waagerecht ausgerichtetes Einstechwerkzeug, welches durch Verfahren des Greifkopfs vor wenigstens einen Zuschnittstapel positionierbar und zum Aufnehmen des Zuschnittstapels mit einer etwa horizontalen Bewegung zwischen Zuschnittstapel und Zwischenlage einführbar ist. Zusätzlich ist wenigstens ein Hubmittel zum Anheben wenigstens einer Seite des Zuschnittstapels vorgesehen.

Der Erfindung liegt daher die Aufgabe zugrunde, eine Vorrichtung und ein Verfahren der gattungsgemäßen Art anzugeben, mittels denen in einfacher Weise ein Stapeln von Profilteilen unterschiedlichster Längen möglich ist.

Erfindungsgemäß wird diese Aufgabe durch eine Vorrichtung mit den in Anspruch 1 genannten Merkmalen gelöst. Dadurch, dass unterhalb der Sammelstation eine Fördereinrichtung zum Zuführen der Stapelzwischenlagen angeordnet ist, der erste Greifarm eine Aufnahme zum Aufnehmen einer Stapelzwischenlage aufweist, der zweite Greifarm einen Kragarm zum Untergreifen der Stapelzwischenlage und der Profilteile umfasst und der Greifeinrichtung eine Steuerung zugeordnet ist, mittels der eine Bewegungsabfolge der Greifarme automatisch in Abhängigkeit einer vorgebbaren Anzahl und Geometrie der zu stapelnden Profilteile erfolgt, ist vorteilhaft möglich, automatisch beliebige Profilteilstapel in Abhängigkeit einer vorgegebenen Anzahl und Geometrie der Profilteile zu erreichen. Insbesondere kann flexibel innerhalb kürzester Zeit auf eine Änderung der Anzahl und der Geometrie der zu stapelnden Profilteile reagiert werden.

Die Aufgabe wird ferner durch ein Verfahren zum Stapeln von Profilteilen mit den in Anspruch 6 genannten Merkmalen gelöst. Dadurch, dass die Profilteile auf einem Ablagetisch lageweise zusammengestellt werden, eine Greifeinrichtung eine Stapelzwischenlage aufnimmt, die zusammengestellte Lage der Profilteile gemeinsam mit der Stapelzwischenlage von der Greifeinrichtung vom Ablagetisch aufgenommen wird und anschließend auf eine Stapelbildungsablage abgelegt wird und dieser Vorgang sooft wiederholt wird, bis eine gewünschte Stapelhöhe erreicht ist, wird vorteilhaft möglich, entsprechend einer Vorgabe automatisch Stapel von Profilteilen zu bilden, die eine gewünschte Anzahl von Profilteilen in einer einzelnen Lage und eine gewünschte Anzahl von Lagen der Profilteile umfasst. Die einzelnen Lagen der Profilteile untereinander sind durch die Stapelzwischenablagen voneinander getrennt, so dass das unmittelbare Aufliegen übereinander liegender Profilteile vermieden wird. Diese können somit auch empfindliche Oberflächen aufweisen, ohne dass diese durch das automatische Stapeln beschädigt werden.

Durch die erfindungsgemäße Vorrichtung und das erfindungsgemäße Verfahren wird insbesondere möglich Profilteile in variablen Packstückbreiten zu stapeln.

Weitere bevorzugte Ausgestaltungen der Erfindung ergeben sich aus den übrigen, in den Unteransprüchen genannten Merkmalen.

Die Erfindung wird nachfolgend in einem Ausführungsbeispiel anhand der zugehörigen Zeichnungen näher erläutert. Es zeigen:
- Figur 1: eine schematische Perspektivansicht einer Vorrichtung zum Handhaben von Profilteilen;
- Figuren 2 bis 9: eine Greifeinrichtung in verschiedenen Arbeitspositionen und
- Figur 10: eine Seitenansicht der Vorrichtung gemäß Figur 1.

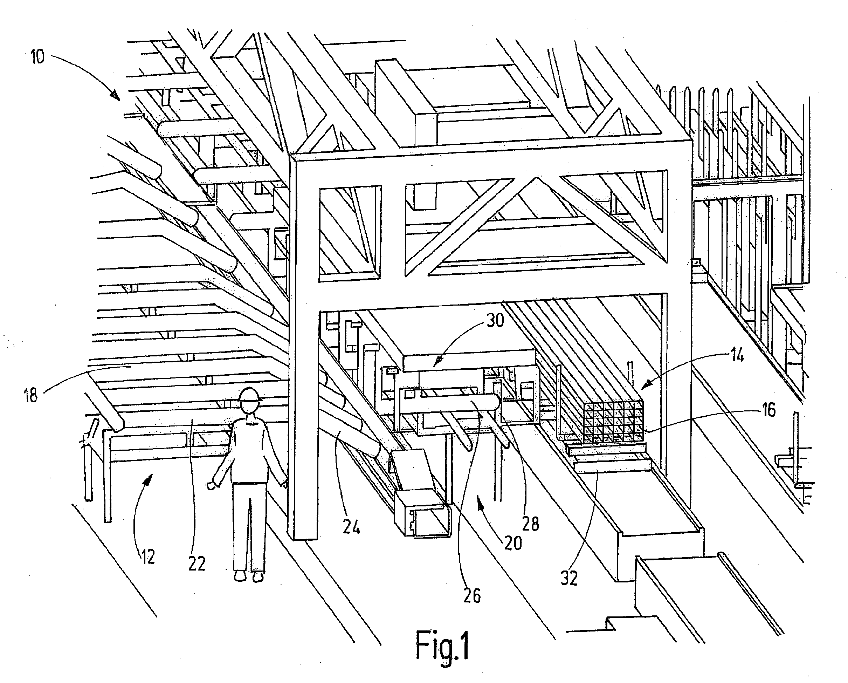

Figur 1 zeigt ausschnittsweise eine insgesamt mit 10 bezeichnete Vorrichtung zum Handhaben von Profilteilen. Die Vorrichtung 10 umfasst eine Zuführstation 12 zum Zuführen von Profilteilen (hier nicht dargestellt). Die Profilteile werden von einem Zwischenlager, einer Herstellungsmaschine oder dergleichen mittels einer Transportstrecke zugeführt. Die Profilteile besitzen eine bestimmte Länge und einen bestimmten Querschnitt. Die Aufgabe besteht darin, diese zugeführten Profilteile zu stapeln. In Figur 1 ist eine Stapel 14 von Profilteilen 16 gezeigt. Der Stapel besteht beispielsweise aus fünf Lagen zu je sechs Profilteilen 16.

Die Zuführstation 12 besitzt Querförderer 18, mittels denen die Profilteile 16 in eine Sammelstation 20 überführbar sind. Die Querförderer 18 besitzen jeweils drei Teilsegmente 22, 24, 26, von denen das mittlerer Teilsegment 24 verschwenkbar angeordnet ist. Das mittlere Teilsegment 24 wird dann aus der Förderebene verschwenkt, wenn einzelne Profilteile beispielsweise wegen qualitativer Mängel aus, aussortiert werden sollen. In der Sammelstation 20 laufen die Profilteile 16 bis zu einer Stoppposition 28, die kurz vor einem Sicherheitsanschlag liegt. So dass durch die Förderkette beziehungsweise das Förderband des letzten Teilsegmentes 26 die Profilteile 16 im Wesentlichen bündig aneinander positioniert werden. Nach Auflaufen der Profilbleche auf das Teilsegment 26 gelangt eine Greifeinrichtung 30 in den Bereich der Sammelstation 20 und nimmt die Profilteile 16 lageweise auf und überführt diese auf eine Ablage 32 zum lageweisen Aufstapeln der Profilteile 16.

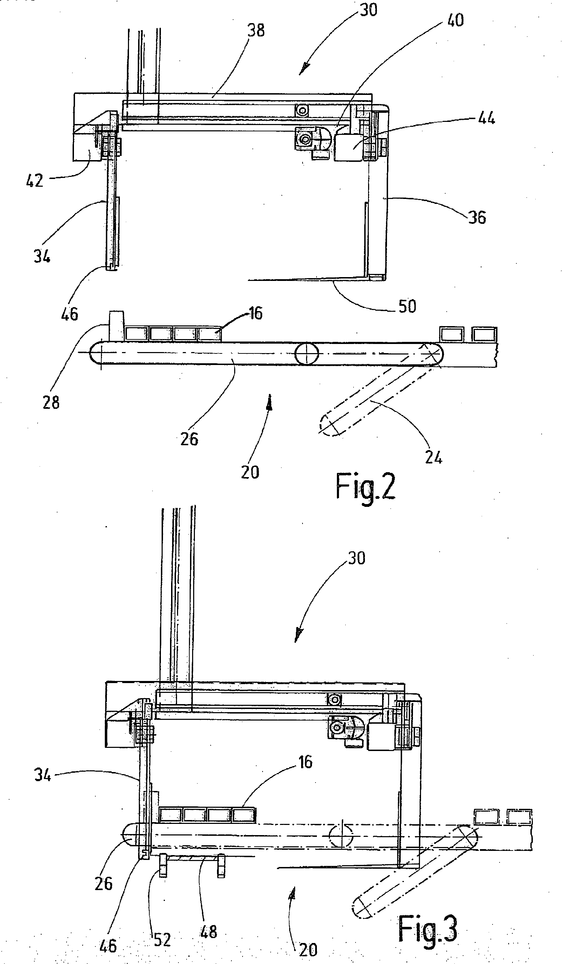

Anhand der nachfolgenden Figuren 2 bis 9 wird der Aufbau und die Funktion der Greifeinrichtung 30 näher erläutert.

Die Figuren zeigen jeweils eine schematische Seitenansicht einer Greifeinrichtung 30 im Bereich eines Querförderers 18. Entsprechend der Gesamtlänge der Vorrichtung 10 sind eine Vielzahl von Greifeinrichtungen 30 jeweils parallel beabstandet zueinander vorgesehen. Die Anzahl der Greifeinrichtungen 30 richtet sich nach der Länge der zu stapelnden Profilteile 16. Die Längen der Profilteile 16 kann beispielsweise zwischen 2 m und 18 m liegen.

Anhand von Figur 2 wird zunächst der Aufbau der Greifeinrichtung 10 detailliert erläutert. Die Greifeinrichtung 30 umfasst einen ersten Greifarm 34 und einen zweiten Greifarm 36. Die Greifarme 34, 36 sind an einem Tragarm 38 angeordnet. Der Greifarm 36 ist mittels einer Antriebs-Schlitten-Kombination 40 am Tragarm 38 relativ zu dem Greifarm 34 verlagerbar. Darüber hinaus ist der Greifarm 34 mittels eines Antriebes 42 höhenverstellbar. Der Greifarm 36 ist ebenfalls mittels eines Antriebes 44 höhenverstellbar.

Der Greifarm 34 besitzt an seinem unteren Ende eine zangenartig wirkende Aufnahme 46 zum Aufnehmen einer hier noch nicht dargestellten Stapelzwischenlage 48. Die zangenartige Aufnahme 46 ist elektrisch, hydraulisch oder pneumatisch betätigbar. Der zweite Greifarm 36 trägt an seinem unterem Ende einen Kragarm 50, der in Richtung des ersten Greifarm 34 konisch spitz zuläuft.

Unterhalb der Greifeinrichtung 30 befindet sich die Sammelstation 20, auf der die Profilteile 16 mittels der Teilsegmente 24 und 26 der Querförderer 18 gegen die Stoppposition 28 verlagert werden.

In den nachfolgenden Figuren sind gleiche Teile mit gleichen Bezugszeichen versehen und nicht nochmals erläutert.

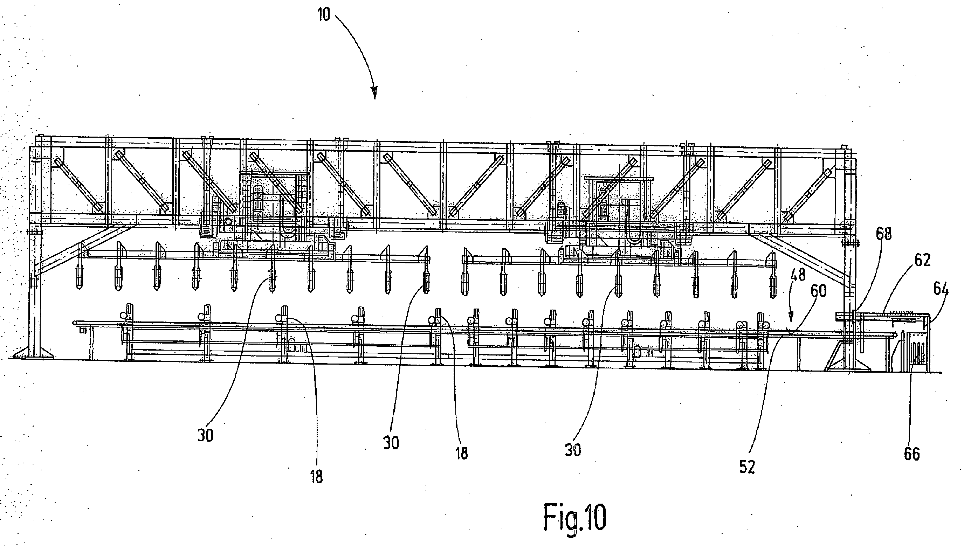

Figur 3 verdeutlicht, wie die Greifeinrichtung 30 in den Bereich der Sammelstation 20 abgesenkt wird. Figur 3 zeigt, dass unterhalb des Teilsegmentes 26 sich eine Fördereinrichtung 52 zum Zuführen der Stapelzwischenlagen 48 befindet. Diese Stapelzwischenlagen 48 werden mittels der Fördereinrichtung 52 von einer in Figur 10 näher gezeigten Zuführungseinrichtung antransportiert. Die Stapelzwischenlagen bestehen beispielsweise aus Pappstreifen, Kunststoffstreifen, Holzstreifen, Filzstreifen oder dergleichen. Die Stapelzwischenlagen 48 werden mittels der Zangenaufnahme 46 des ersten Greifarm 34 einseitig gegriffen und festgeklemmt.

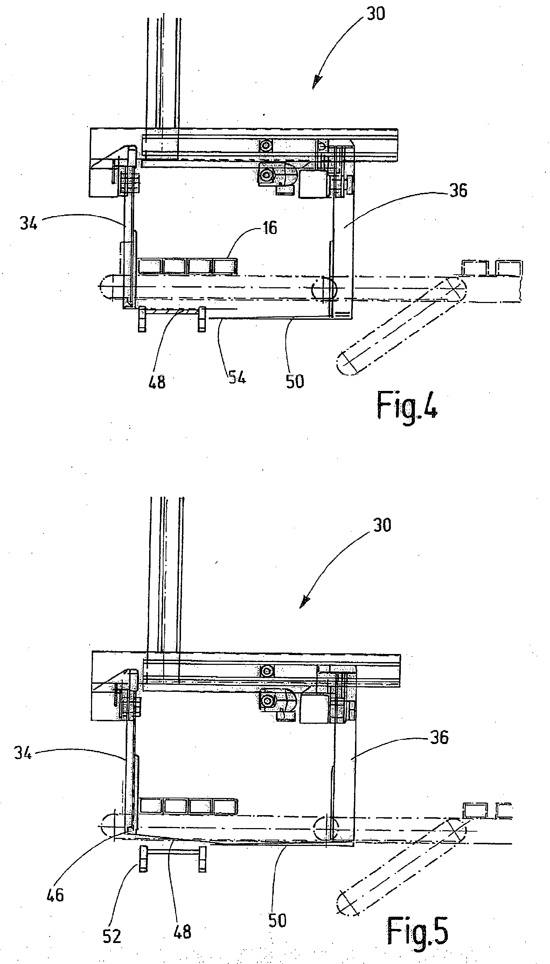

Wie Figur 4 verdeutlicht, wird anschließend der zweite Greifarm 36 in Richtung des ersten Greifarm 34 verfahren, so dass ein vorderer Bereich 54 des Kragarmes 50 unterhalb der Stapelzwischenlage 48 gelangt. Es bildet sich somit ein Überlappungsbereich zwischen Stapelzwischenlage 48 und Kragarm 50.

Anschließend wird, wie Figur 5 verdeutlicht, der erste Greifarm 34 nach oben gefahren, so dass die Stapelzwischenlage 48 von der Fördereinrichtung 52 abgehoben wird. Die Stapelzwischenlage 48 wird hierbei durch den Zangengreifer 46 einseitig gehalten. Am entgegengesetzten Ende liegt die Stapelzwischenlage 48 auf dem Kragarm 50 auf.

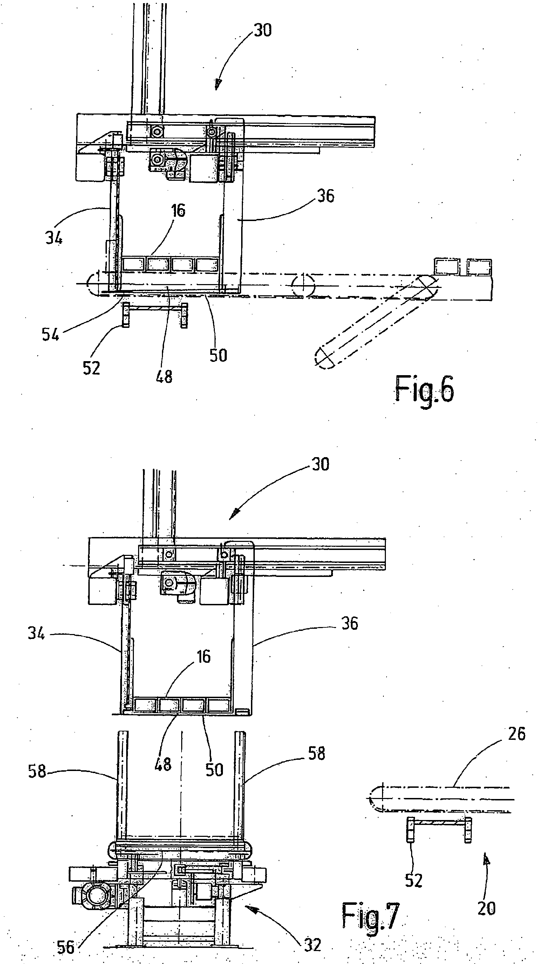

Anschließend wird, wie Figur 6 verdeutlicht, der zweite Greifarm 36 angehoben und in Richtung des ersten Greifarmes 34 verlagert. Diese Verlagerung erfolgt soweit, dass beide Greifarme 34 und 36 seitlich an der Lage der Profilteile 16 anliegen. Der Kragarm 50 trägt hierbei die Stapelzwischenlage 48, die somit im Wesentlichen parallel unterhalb der Lage der Profilteile 16 angeordnet ist. Der Kragarm 50 fährt hierbei mit seinem vorderen Bereich 54 unter den ersten Greifarm 34.

Nachfolgend wird die Greifeinrichtung 30 insgesamt angehoben, so dass die Lage der Profilteile 16 oberhalb der Stapelzwischenlage 48 auf dem Kragarm 50 zu liegen kommt. Hierdurch wird die Lage der Profilteile 16 von der Sammelstation 20 abgehoben und in Richtung der Ablage 32 transportiert (Figur 7). Die Profilteile 16 können beim Zusammenführen der Greifarme 34, 36 auf optimale Breite geschoben werden. Die Innenseite der Greifarme 34, 36 sind materialschonend beschichtet um Kratzer oder dergleichen an den Profilteilen 16 zu vermeiden.

Die Ablage 32 umfasst einen Förderschlitten 56. Beidseitig des Förderschlittens 56 sind Begrenzungspfosten 58 angeordnet. Ein Abstand zwischen den Begrenzungspfosten 58 entspricht der Breite einer Lage der Profilteile 16. Die Begrenzungspfosten 58 können in ihrem Abstand zueinander variabel eingestellt sein, so dass unterschiedlich breite Lagen von Profilteilen 16 gestapelt werden können.

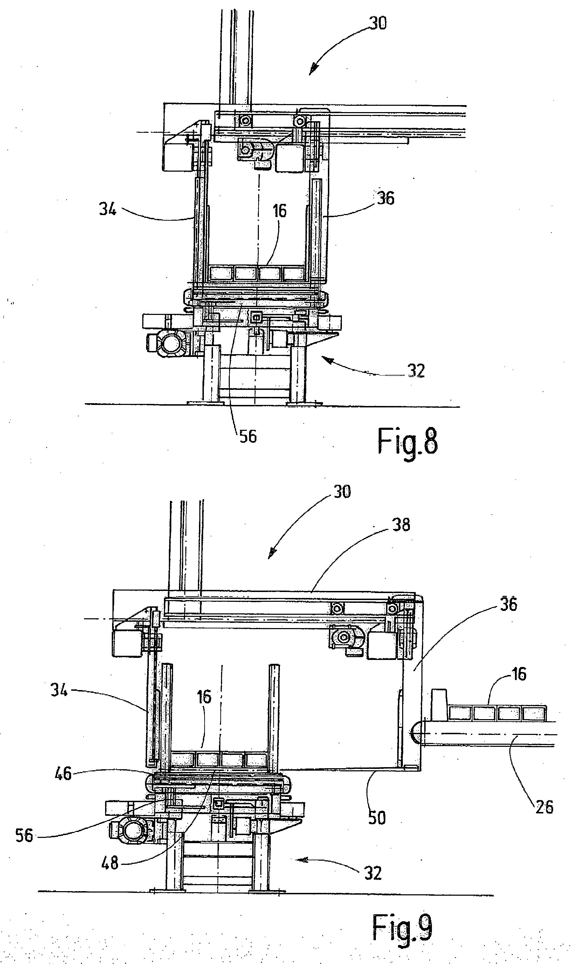

Figur 8 verdeutlicht, wie mittels der Greifeinrichtung 30 die Profilteile 16 auf dem Förderschlitten 56 abgelegt werden. Hierbei kommen die Profilteile 16 auf der Stapelzwischenlage 48 zum Liegen. Anschließend wird, wie Figur 9 verdeutlicht, der zweite Greifarm 36 entlang des Tragarmes 38 verfahren, so dass der Kragarm 50 unter der Stapelzwischenlage 48 herausgezogen wird. Diese verbleibt somit auf dem Förderschlitten 56. Dieses Herausziehen des Kragarmes 50 wird durch dessen konisch spitz zulaufende Form problemlos ermöglicht. Anschließend wird die Zangenaufnahme 46 des Greifarmes 34 geöffnet, so dass die Greifeinrichtung 30 insgesamt wieder in den Bereich der Sammelstation 20 überführt werden kann, um dort eine nächste Lage von Profilteile 16, wie beginnend mit Figur 2 erläutert, aufnehmen zu können. Hierbei wird zwischen übereinander liegenden Lagen der Profilteile 16 jeweils eine Stapelzwischenlage 48 mit angeordnet.

Es wird deutlich, dass die Greifeinrichtung 30 durch eine im Einzelnen nicht dargestellte Steuerung automatisch die Profilteile 16 greift und diese auf der Ablage 32 stapelt. Die Höhe und die Breite der Stapel kann durch die Steuerung flexibel angegeben werden und richtet sich nach der Anzahl und der Größe der zu stapelnden Profilteile 16.

Figur 10 zeigt eine Seitenansicht der gesamten Vorrichtung 10. Es wird deutlich, dass die Vorrichtung 10 gemäß diesem Ausführungsbeispiel insgesamt 19 Greifeinrichtungen 30 umfasst. Entsprechend der Länge der zu stapelnden Profilteile 16 arbeitet eine entsprechende Anzahl der Greifeinrichtungen 30 synchron. Bei kürzeren Profilteilen 16 arbeiten beispielsweise nur 10 Greifeinrichtungen 30 und bei längeren Profilteilen 16 beispielsweise alle 19 Greifeinrichtungen 30.

Deutlich wird ferner die sich über die Länge der Vorrichtung 10 erstreckende Fördereinrichtung 52 für die Stapelzwischenlagen 48. Die Fördereinrichtung 52, beispielsweise eine Endlosband, besitzt an seiner Oberfläche Aufnahmetaschen 60 in die jeweils eine Stapelzwischenlage 48 eingelegt wird. Das Einlegen der Stapelzwischenlage 48 erfolgt durch eine Zuführeinrichtung 62, die mittels eines Greifers 64 jeweils eine Stapelzwischenlage 48 aus einem Magazin 66 greift. Mittels des Greifers 64 werden die aus dem Magazin 66 entnommenen Stapelzwischenlagen 48 einer Schneideeinrichtung 68 zugeführt. Dort werden die Stapelzwischenlagen 48 auf die tatsächliche Breite des späteren Stapels der Profilteile 16 zugeschnitten. Die Schneideinrichtung 66 ist mit der Steuerung für die Greifeinrichtung 30 in derart gekoppelt, dass variabel auf die tatsächliche Anzahl, der Profilteile 16 pro Lage, reagiert wird und eine entsprechend lange Stapelzwischenlagen 48 bereits gestellt werden.

In Figur 10 wird auch deutlich, dass die Greifeinrichtung 30 leicht versetzt zu den Querförderern 18 angeordnet sind. Insofern können die Greifeinrichtungen 30 ohne Komplikationen die auf den Querförderern 18 abgelegten Profilteile aufnehmen.

### Bezugszeichenliste

- 10: Vorrichtung zum Handhaben von Profilteilen
- 12: Zuführstation
- 14: Stapel
- 16: Profilteile
- 18: Querförderer
- 20: Sammelstation
- 22: Teilsegment
- 24: Teilsegment
- 26: Teilsegment
- 28: Stoppposition
- 30: Greifeinrichtung
- 32: Ablage
- 34: erster Greifarm
- 36: zweiter Greifarm
- 38: Tragarm
- 40: Antriebs-Schlitten-Kombination
- 42: Antrieb
- 44: Antrieb
- 46: zangenartige Aufnahme
- 48: Stapelzwischenlage
- 50: Kragarm
- 52: Fördereinrichtung
- 54: vorderer Bereich von 50
- 56: Förderschlitten
- 58: Begrenzungspfosten
- 60: Aufnahmetaschen
- 62: Zuführeinrichtung
- 64: Greifer
- 66: Magazin
- 68: Schneideinrichtung

## Patentansprüche

1. Vorrichtung (10) zum Stapeln von Profilteilen (16), mit einer Greifeinrichtung (30) zum Greifen der Profilteile (16) und einer Ablage (32) zum lageweisen Ablegen der Profilteile (16), wobei die Greifeinrichtung (30) einen ersten Greifarm (34) und einen zweiten Greifarm (36) umfasst, die Greifarme (34, 36) relativ zueinander an einem Tragarm (38) verlagerbar sind, die Greifarme (34, 36) unabhängig voneinander in der Höhe verlagerbar sind und die Vorrichtung (10) eine Sammelstation (20) aufweist, in deren Bereich die Greifeinrichtung (30) absenkbar angeordnet ist, **dadurch gekennzeichnet, dass** unterhalb der Sammelstation (20) eine Fördereinrichtung (52) zum Zuführen einer Stapelzwischenlage (48) angeordnet ist, der erste Greifarm (34) eine Aufnahme (46) zum Aufnehmen der Stapelzwischenlage (48) auf der Fördereinrichtung (52) aufweist, der zweite Greifarm (36) einen Kragarm (50) zum Untergreifen der Stapelzwischenlage (48) und der Profilteile (16) umfasst und der Greifeinrichtung (30) eine Steuerung zugeordnet ist, mittels der eine Bewegungsabfolge der Greifarme (34, 36) automatisch in Abhängigkeit einer vorgebbaren Anzahl und Geometrie der zu stapelnden Profilteile (16) erfolgt.

2. Vorrichtung nach Anspruch 1, **dadurch gekennzeichnet, dass** die Aufnahme (46) eine Greifzange umfasst, die elektrisch, hydraulisch oder pneumatisch betätigbar ist.

3. Vorrichtung nach einem der vorgenannten Ansprüche, **dadurch gekennzeichnet, dass** der Kragarm (50) in Richtung des ersten Greifarmes (34) konisch zuläuft.

4. Vorrichtung nach einem der vorgenannten Ansprüche, **dadurch gekennzeichnet, dass** der Fördereinrichtung eine Schneideinrichtung (68) zum Zuschneiden der Stapelzwischenlage (48) zugeordnet ist.

5. Vorrichtung nach einem der vorgenannten Ansprüche, **dadurch gekennzeichnet, dass** die Ablage (32) Begrenzungspfosten (58) umfasst, die in ihrem Abstand zueinander variabel einstellbar sind.

6. Verfahren zum Stapeln von Profilteilen (16) mit einer Vorrichtung nach Anspruch 1, wobei die Profilteile (16) in der Sammelstation (20) lageweise zusammengestellt werden, eine Greifeinrichtung (30) eine Stapelzwischenlage (48) aufnimmt, die zusammengestellte Lage der Profilteile (16) gemeinsam mit der Stapelzwischenlage (48) von der Greifeinrichtung (30) von der Sammelstation aufgenommen wird und anschließend auf der Ablage (32) zum Bilden eines Stapels abgelegt wird und dieser Vorgang so oft wiederholt wird, bis eine gewünschte Stapelhöhe erreicht ist.

## Claims

1. A device (10) for stacking profile sections (16), having a gripping unit (30) for gripping the profile sections (16) and a tray (32) for layered storing of the profile sections (16), wherein the gripping unit (30) includes a first gripper arm (34) and a second gripper arm (36), said gripper arms (34, 36) can be moved relative to one another along a support arm (38), said gripper arms (34, 36) can be independently shifted in height, and the device (10) comprises a collecting station (20) in the area of which the gripping unit (30) is lowerably arranged, **characterized in that** a conveyor (52) for inserting an intermediate stacking layer (48) is provided below the collecting station (20), the first gripper arm (34) comprises a retainer (46) for receiving the intermediate stacking layer (48) on the conveyor (52), the second gripper arm (36) comprises a cantilever (50) for reaching under the intermediate stacking layer (48) and the profile sections (16), and a controller is associated with the gripping unit (30) which lets the gripper arms (34, 36) automatically perform a sequence of movements depending on a presettable number and geometry of the profile sections (16) to be stacked.

2. The device according to claim 1, **characterized in that** the retainer (46) includes gripping tongs that can be operated electrically, hydraulically, or pneumatically.

3. The device according to any one of the preceding claims, **characterized in that** the cantilever (50) tapers towards the first gripper arm (34).

4. The device according to any one of the preceding claims, **characterized in that** the conveyor is associated with a cutting device (68) for cutting the intermediate stacking layer (48) to size.

5. The device according to any one of the preceding claims, **characterized in that** the tray (32) includes limiting posts (58) spaced at distances from one another that can be variably set.

6. A method for stacking profile sections (16) using a device according to claim 1, wherein the profile sections (16) are compiled in layers at the collecting station (20), a gripping unit (30) picks up an intermediate stacking layer (48), then the gripping unit (30) picks up the compiled layer of profile sections (16) from the collecting station together with the intermediate stacking layer (48) and places it onto the tray (32) to form a stack, and this process is repeated until a desired stacking height is reached.

## Revendications

1. Dispositif (10) d'empilement d'éléments de profilé (16), avec un dispositif de préhension (30) destiné à la préhension d'éléments de profilé (16) et un dépôt (32) pour déposer en couches les éléments de profilé (16), le dispositif de préhension (30) comprenant un premier bras de préhension (34) et un deuxième bras de préhension (36), les bras de préhension (34, 36) pouvant être déplacés l'un par rapport à l'autre sur un bras porteur (38), les bras de préhension (34, 36) pouvant être déplacés en hauteur indépendamment l'un de l'autre, et le dispositif (10) présentant un poste collecteur (20) dans la zone duquel le dispositif de préhension (30) est disposé de façon à pouvoir être abaissé, **caractérisé en ce que**, au-dessous du poste collecteur (20), il est disposé un dispositif de transport (52) qui est destiné à conduire une couche intermédiaire d'empilement (48), le premier bras de préhension (34) présente une réception (46) destinée à recevoir la couche intermédiaire d'empilement (48) sur le dispositif de transport (52), le deuxième bras de préhension (36) comprend un bras en porte-à-faux (50) destiné à agripper par en-dessous la couche intermédiaire d'empilement (48) et les éléments de profilé (16), et une commande est affectée au dispositif de préhension (30), à l'aide de laquelle une séquence de mouvement des bras de préhension (34, 36) s'effectue automatiquement en fonction d'un nombre et d'une géométrie pouvant être prédéfinis d'éléments de profilé (16) à empiler.

2. Dispositif selon la revendication 1, **caractérisé en ce que** la réception (46) comprend une pince de préhension qui peut être actionnée électriquement, hydrauliquement ou pneumatiquement.

3. Dispositif selon une des revendications précédentes, **caractérisé en ce que** le bras en porte-à-faux (50) est conique en direction du premier bras de préhension (34).

4. Dispositif selon une des revendications précédentes, **caractérisé en ce qu'**au dispositif de transport est affecté un dispositif de coupe (68) destiné à couper la couche intermédiaire d'empilement (48).

5. Dispositif selon une des revendications précédentes, **caractérisé en ce que** le dépôt (32) comprend des poteaux de limitation (58) dont les intervalles les uns par rapport aux autres peuvent être réglés de façon variable.

6. Dispositif d'empilement d'éléments de profilé (16), avec un dispositif selon la revendication 1, les éléments de profilé (16) étant rassemblés en couches dans le poste collecteur (20), un dispositif de préhension (30) ramassant une couche intermédiaire d'empilement (48), la couche rassemblée d'éléments de profilé (16) étant ramassée à partir du poste collecteur en même temps que la couche intermédiaire d'empilement (48) par le dispositif de préhension (30) avant d'être déposée sur le dépôt (32) pour la formation d'une pile, et ce processus étant répété jusqu'à l'obtention d'une hauteur d'empilement souhaitée.
